Europäisches Patentamt

European Patent Office

Office européen des brevets

(11) Publication number: **0 350 911**
**A2**

(12) # EUROPEAN PATENT APPLICATION

(21) Application number: **89112824.1**

(22) Date of filing: **13.07.89**

(51) Int. Cl.⁴: **G06F 15/16**

(30) Priority: **13.07.88 US 220430**

(43) Date of publication of application:
**17.01.90 Bulletin 90/03**

(84) Designated Contracting States:
**DE FR GB**

(71) Applicant: **Modular Computer Systems Inc.**
**Box 60 99 1650 West McNab Road**
**Fort Lauderdale Fl 33310(US)**

(72) Inventor: **Earnshaw, William E.**
**961 SW 81 Terr**
**N. Lauderdale, Florida 33068(US)**
Inventor: **Furht, Borko**
**10310 SW 128 Avenue**
**Miami, Florida 33186(US)**
Inventor: **Kibler, Ronald**
**19536 Colorado Circle**
**Boca Raton, Florida 33434(US)**
Inventor: **Parker, John**
**9715 SW 1 Ct.**
**Coral Spring, Florida 33071(US)**
Inventor: **Ohel, Hagai**
**1590 NW 93 Terr**
**Coral Springs, Florida 33071(US)**
Inventor: **Rabbat, Guy**
**1341 SW 15 Street**
**Boca Raton, Florida 33486(US)**
Inventor: **Ripy, Paul B.**
**1311 SW 71 Terrance**
**N. Lauderdale, Florida 33068(US)**

(74) Representative: **Vogl, Leo, Dipl.-Ing.**
**AEG Aktiengesellschaft Theodor-Stern-Kai 1**
**D-6000 Frankfurt am Main 70(DE)**

(54) Tightly coupled multiprocessor structure for real-time applications.

(57) Current multiprocessor structures improve the speed of computation, but do not provide an efficient solution for real-time applications, where, in addition to high CPU speed, there is also need for high I/O throughput and an efficient interrupt handling.

The present invention resolves this difficulty by providing a tightly coupled multiprocessor structure, which optimally balances the three critical features of a computer system applied in a real-time environment, which are: CPU speed, I/O throughput, and interrupt handling capability.

In particular the invention includes a multiprocessor system comprising a number of N processor units, M input-output devices, a common Global Memory, a memory bus and means to operate a plurality of different peripherial devices, wherein a system support processor, and an a event bus are provided and wherein said system support processor performs interrupt handling of data streams and said event bus performs interrupt distribution among the elements of the multiprocessor system.

FIG.1

## TIGHTLY COUPLED MULTIPROCESSOR STRUCTURE FOR REAL-TIME APPLICATIONS

### BACKGROUND OF THE INVENTION

This invention relates generally to multiprocessor systems applied in real-time systems. More specifically, it relates to a tightly coupled multiprocessor structure in which multiple processors operate simultaneously in order to balance three key performance attributes: speed of CPU computation, high I/O throughput and an efficient interrupt handling capability.

Existing structures of multiple processors are typically designed to improve the performance of the Central Processing Unit (CPU). These structures apply pipelining, which divides computation into a number of steps, or parallelism, which uses multiple resources. Existing multi processor structures can be categorized into: (a) loosely coupled, and (b) tightly coupled. The loosely coupled multiprocessors consist of independent processors connected via high speed communication links. They have separate copies of operating systems. In the tightly coupled multiprocessors, all CPUs share global memory, and there is a single copy of the operating system and data structures. There is no synchronization problem, however, global memory bus represents a system bottle-neck. Existing tightly coupled multiprocessor structures improve the speed of computation, however, the computation power of a computer cannot be accomplished solely by high performance of the CPU, especially in the area of real-time computing and intensive I/O operations.

In most systems the semaphores, which protect system data structures in global memory, are part of the operating system implemented in software. This degrades overall system performance due to: (a) complex algorithm consumes CPU time, and (b), extended hardware bus lock impedes bus traffic.

### SUMMARY OF THE INVENTION

In view of the above described difficulties with prior art real-time multiprocessor systems it is a object of the present invention to provide a tightly coupled multiprocessor structure which balance sufficient speed of CPU computation, high I/O throughput and an efficient interrupt handling capability.

In accordance to the invention this object is met by providing a multiprocessor system which comprises a number of N processor units, M input-output devices, a common Global Memory, a memory bus and means to operate a plurality of different peripherial devices, wherein a system support processor, and an a event bus are provided and wherein said system support processor performs interrupt handling of data streams and said event bus performs interrupt distribution among the elements of the multi processor system.

More specifically, according to the invention memory bus contention problem is solved by a Memory Bus which connects the common memory to all CPUs and I/O modules and which consists of four independent, 32-bit buses with a high clock rate. The local memory in all CPUs provides the storage of critical operating system instructions, non-user interrupt service routines and private non-shared data. A high speed semaphore processor built in hardware significantly reduces semaphore based global memory bus transactions. An event bus allows the multiprocessor system to handle a large number of interrupts by load balancing of real-time interrupts. Event bus control is provided by a central event control, while modules are interfaced to the event bus via an interrupt controller.

The invention will be more specifically described with relation to a perferred embodiment thereof illustrated in the appended drawings.

### BRIEF DESCRIPTION OF DRAWINGS

Fig. 1 Illustrates the general structure of the tightly-coupled multiprocessor system consisting of a number of CPU and I/O units, a storage server, a system support processor, a global memory and two buses: memory bus and event bus.

Fig. 2 Illustrates the pipelined timing diagram of the arbitration and access cycles on the memory bus.

Fig. 3 Illustrates the basic functional elements of the Event Bus: a requesting agent, a servicing agent and a central interrupt control,

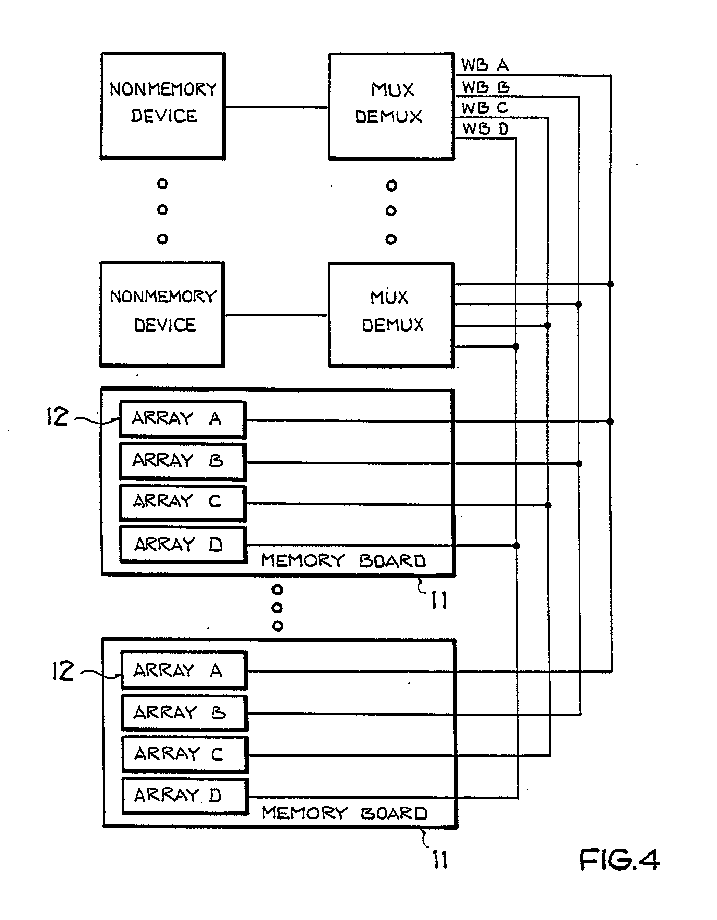

Fig. 4 Illustrates the global addressing memory scheme.

### DESCRIPTION OF THE PREFERRED EMBODIMENT

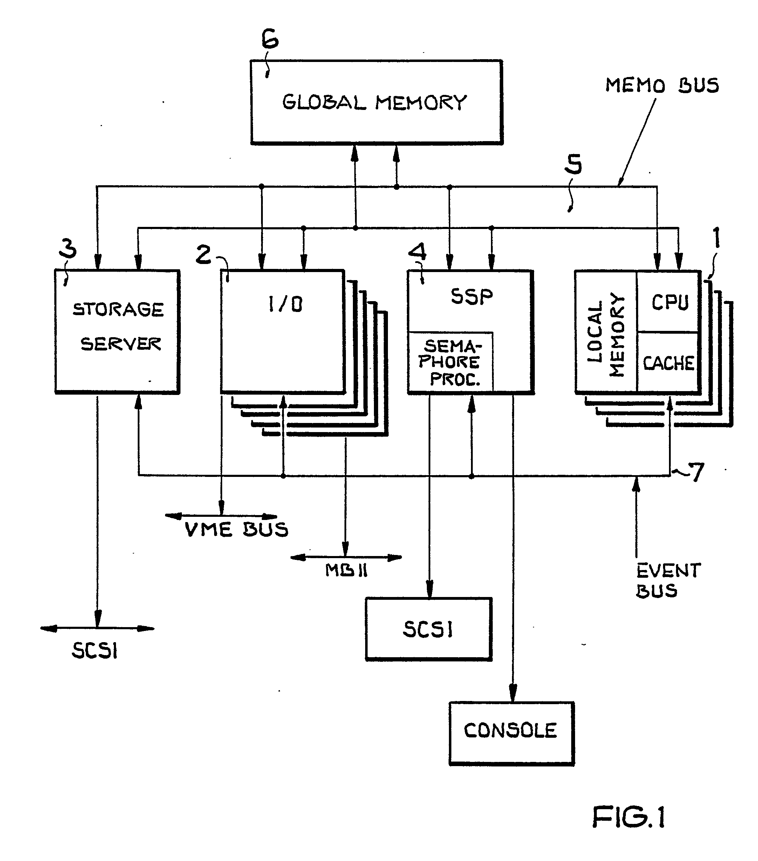

In Fig. 1 an overall embodiment of the invention is shown. The system consists of a number of CPU units (2 to 20) 1, a number of I/O units (2 to 10) 2, a Storage Server (SS) 3 and a System Support Processor (SSP) 4. They all share global memory via the Memory Bus 5. There is a single copy of the operating system placed in the global memory 6. Interrupt handling is performed by a Central Event Control unit placed in the SSP 4, while the interrupt distribution is done via the Event Bus (EB) 7.

The memory Bus (MB) 5 consists of four independent 32-bit buses with a 12.5 MHz clock rate. The MB is a synchronous bus with non-multiplexed address and data bits. This allows a data transfer rate of 50 Mbytes/sec. Each of the four buses operates concurrently with a maximum aggregate bandwidth of 200 Mbytes/sec.

The MB has three types of bus cycles:

(a) writes from non-memory agents to memory agents,

(b) requests from non-memory agents to memory agents,

(c) writes from memory agents to non-memory agents.

Since a read function is two to five bus transfers, the bus is available for other operations while the read is being processed. This allows more efficient use of the system bus.

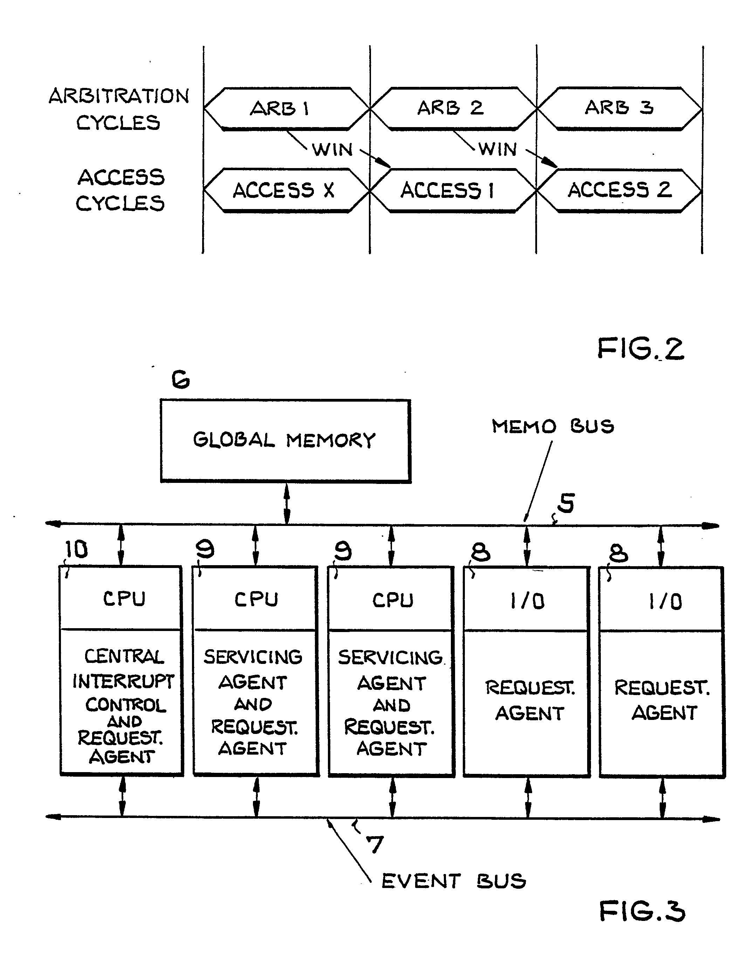

The arbitration function required to handle bus sharing on the MB is performed by a Central Arbitration Unit (CAU). In order to achieve maximum bus bandwidth on all buses, the arbitration cycles are pipelined with access cycles, as shown in Fig. 2.

The arbitration signals consist of one request and one grant from each agent on the bus. The arbitration algorithm is based on two rotating queues with a fixed priority between queues.

The Event Bus is a synchronous multifunction bus. The data bus portion of the bus provides a vehicle on which interrupts, priority resolution, and interrupt tagging information is passed. The control portion of the bus defines at any given time the mode that the Event Bus is operating in. The Event Bus is the vehicle in which the interrupt requesting agents and interrupt servicing agent resolve all source and destination routing. The Event Bus consists of 32 data lines, 4 interrupt identification lines, 3 interrupt cycle function lines and a synchronization clock. The data lines are multiplexed to provide 16 levels of prioritized interrupts and 16 interrupt enable lines.

The codes of the Event Bus are defined as an interrupt processing method used to process a specific interrupt. There are six modes of operation: 1) distributed priority interrupts, 2) task activation interrupts, 3) message based interrupts, 4) global common interrupts, 5) non-maskable interrupt and 6) local interrupts.

The Distributed Priority Interrupt mode allows interrupts to be processed by the most available servicing agent that is enabled to handle that level.

The Task Activation Interrupt mode allows an interrupt to be processed by the most available sevicing agent that is able to change to the new task level, which implies any servicing agent that is currently running lower than the new task level.

The Message Based Interrupt mode allows a requesting agent to send an interrupt to a specific servicing agent.

The Global Common Interrupt mode is a method by which a requesting agent may broadcast an interrupt to all servicing agents that are enabled to handle that interrupt level.

The Non-Maskable Interrupt mode is an interrupt that cannot be ignored. This mode is used to warn all modules in the system that power is going away.

The Local Interrupts are not part of the Event Bus global interrupt scheme. These interrupts are used to connect local events to the prioritized interrupt structure.

The Event Bus 7 allows the system to handle a large number of interrupts in a deterministic manner. Event Bus timing and control are provided by Central Interrupt Control Unit (CICU) placed in the SSP. The CICU also distributes interrupts in the multi-processor system via the Event Bus. The EB provides sixteen levels of hardware prioritized interrupts and has the ability to direct interrupts to the. processor which is most able to handle the interrupt. This interrupt handling capability is based upon a programable value by each processor in the system. The programmable value directly relates to the task priority that is currently executing on each processor. The CPU units are interfaced to the Event Bus via Local Interrupt Control Units (LICU). The LICU contains all necessary logic to handle the Event Bus, plus the processor interface and the local interrupt structure.

The Event Bus 7 is composed of three different types of functional interface elements as shown in Fig. 3. These elements are: requesting agents 8, servicing agents 9 and a central interrupt control 10. The requesting and servicing agent functions both reside in the LICU.

The CICU serves as a common control element that prioritizes interrupts and generates the Event Bus Control and timing signals. The LICU provides the interface between a processor module and the Event Bus. The primary logic blocks of the LICU are the requesting agent block 8, the servicing agent block 9 and the logical interrupt interface 10. The requesting agent block has all the necessary logic to generate all levels of interrupts, with the exception of a non-maskable interrupt. This logic includes the Event Bus requesting logic, the Event Bus acknowledge logic, the interrupt identification and source tag logic, and the necessary logic to support all of the interrupt categories. The servicing agent block contains all necessary logic to handle interrupts. This logic includes the interrupt requesting, enabled and active registers, the interrupt vector registers, interrupt configuration, and the active interrupt level control logic. Local interrupts interface contains the elements needed to interface the LICU to a processor module. This logic includes the NMI (non-masking interrupt) and the INTR (Interrupt) request signals, the address and data interface, interrupt acknowledge logic and the miscellaneous control signals.

Each CPU 1 unit consists of: (a) a high-performance 32-bit single chip CPU, which typically has on-chip bus interface unit, instruction decode and execution units, and memory management unit, (b) floating point coprocessor, (c) local memory, (d) cache controller and cache memory, (e) local interrupt controller unit, (f) memory bus controller and (g) semaphore assist logic.

Local memory is used for storing Operating Sytem (OS) instructions, non-user interrupt service routines, and private non-shared data for fast access. Local access of the OS instructions and data increases bus bandwidth to other bus agents by avoiding access of the Memory Bus.

The cache memory improves the performance of the global memory (DRAM) by providing the CPU with a small amount of high speed SRAM. The cache contains a copy of frequently accessed global memory locations, thus providing the performance of a large SRAM based global memory.

Each cache consists of 64 Kbytes of high speed SRAM based cache data buffer. The cache is controlled by a Cache Controller, which intercepts the CPU memory agents and checks if the SRAM has the data requested by the CPU. If the SRAM does not, the Cache Controller performs the global memory access and stores the received data in the SRAM as well as passing it to the CPU. The Cache controller is made up of four cache tag circuits, one per 32-bit bus 5. Each cache tag circuit interfaces to its region of the cache data buffer. The cache system features include: (a) Cache coherency maintained by bus watching, (b) Tag RAM and compare circuitry, (c) Write through cache data buffer, and (d) Direct mapped with bus associative properties.

Each CPU contains four Memory Bus Controllers. Each controller contains data and address FIFOs and logic to arbitrate and control access to and from the bus.

The System Support Processor (SSP) consists of a CPU unit, RAM and EPROM memory, Memory Bus and Event Bus interfaces, operator interfaces, Small Computer System Interface (SCSI) and a Semaphore Processor. Only the Semaphore Processor is illustrated in Fig. 1 in detail.

In the present invention the Semaphore Processor is an extension of the CPU/Memory environment. The Semaphore Processor incorporates software semaphore algorithms in a hardware state machine that is connected to the Memory Bus via the controllers. The Semaphore Processor consists of a hardware sequencer, 1 Mbyte RAM, and the MB interface. Software semaphore algorithms are encoded in memory read addressed that are intercepted and serviced by the SP. Within the addresses received, two fields are used to specify the particular type of the algorithm and the semaphore memory address to be operated upon. In this approach, the SP appears to the other components of the system as a memory agent. The MB memory protocol is adhered to by SP, minimizing the effort to invoke a semaphore operation. Bus locking is not required due to the SP operating upon the semaphore data on a first-come, first-serve basis.

The Global Memory 6 is a high capacity, high speed, DRAM memory which serves the agents using simple memory operations.

The Storage Server 3 is intended to serve as a high performance interface to all disc and tape peripherals. Designed around an ultra high speed microprocessor, the Storage Server 3 supports a large disc cache system, performs virtual memory transaction, and a variety of embedded utility functions. The SS provides a modular interface to the SCSI (Small Computer System Interface) peripheral devices.

The memory system reduces the contention in the following ways: (a) up to 16-way interleaving address scheme, (b) memory agents have highest level of MB arbitration priority, (c) copy of non-data structure portion of the operating system resides in each CPU's local memory, (d) copy of OS interrupt routines reside in each CPU's local memory, (e) system semaphore operations are routed to a separate semaphore processor with its own semaphore memory.

The interleaving global memory addressing scheme is intended to balance accesses equally among all memory subsystems. By increasing the number of memory subsystems, and thus the interleave factor, contention for any one array is reduced. A memory subsystem has the ability to perform multiple word accesses consisting of double, triple or quad words. The memory subsystem decodes the access type information from the source/access tag it receives during a request-to-read operation.

The global memory addressing scheme, shown in Fig. 5, allows sequential access by non-memory devices to be evenly distributed over the four independent buses. Each memory board 11 has four separate address, data and control buses, each with a bandwidth of 50 Mbytes/second for a total of 200 Mbytes/second. Each memory board contains four 32-bit arrays 12 (A to D) and supports the byte enable scheme. The byte enable signals are used to decode which of the bytes are being accessed, two address bits are used to indicate which array is selected, while the other two address bits are used to indicate which board is being selected. This decode scheme makes the memory subsystem appear as a 128-bit memory block. The four independent buses reduce contention for the global memory significantly.

While the invention has been particullary described with reference to a preferred embodiment it will be understood by those skilled in the art that various changes in form and detail may be made without departing from the scope and spirit of the invention.

## Claims

1. A multiprocessor system comprising a number of N processor units, M input-output devices, a common Global Memory, a memory bus and means to operate a plurality of different peripherial devices, wherein a system support processor, and an a event bus are provided and wherein said system support processor performs interrupt handling of data streams and said event bus performs interrupt distribution among the elements of the multiprocessor system.

FIG.1

FIG.2

FIG.3

FIG.4